# EUROPEAN PATENT SPECIFICATION

(11) **EP 0 800 347 B1**
(45) Date of publication and mention of the grant of the patent: **27.12.2000**
(21) Application number: 96930296.7
(22) Date of filing: 30.08.1996
(51) Int. Cl.: A23K 1/14, A23K 1/16

(54) **FEED ADDITIVES HAVING PHYSIOLOGICALLY FAVOURABLE EFFECT**
FUTTERZUSATZSTOFFE MIT PHYSIOLOGISCH WERTVOLLEM EFFEKT
ADDITIFS ALIMENTAIRES AYANT UN EFFET PHYSIOLOGIQUE FAVORABLE

(30) Priority: 21.09.1995 HU 9502766
(43) Date of publication of application: 15.10.1997
(73) Proprietor: Kékes-Szabo, Andras, 7171 Siogard (HU); Farkas, Tibor, 6723 Szeged (HU); De Atzel Edward, 7171 Sioagard (HU); Török, Csaba, 7171 Sioagard (HU); Nagyne Farkas, Rita, 6723 Szeged (HU); Kekes-Szabo, Ferenc, 6080 Szabadszallas (HU); Kulcsar, Erika, 7171 Sioagard (HU)
(72) Inventor: Kékes-Szabo, Andras, 7171 Siogard (HU); Farkas, Tibor, 6723 Szeged (HU); De Atzel Edward, 7171 Sioagard (HU); Török, Csaba, 7171 Sioagard (HU); Nagyne Farkas, Rita, 6723 Szeged (HU); Kekes-Szabo, Ferenc, 6080 Szabadszallas (HU); Kulcsar, Erika, 7171 Sioagard (HU)
(74) Representative: Viering, Jentschura & Partner
(86) International application number: HU9600048
(87) International publication number: WO9710723

(56) References cited:
- EP-A- 0 197 188
- EP-A- 0 363 733
- EP-A- 0 658 313
- AU-B- 631 010
- DE-A- 4 301 736
- GB-A- 2 137 881
- US-A- 4 357 358
- US-A- 5 069 903
- DATABASE WPI Week 8312 Derwent Publications Ltd., London, GB; AN 83-28378K XP002022786 & JP,A,58 023 754 (NISSHIN FLOUR MILL KK) , 12 February 1983

## Description

The invention relates to a feed additive having physiologically favourable effect and to a process for the preparation thereof.

Though cholesterol performs important biological tasks in the body, it is the public enemy No. 1 in our age.

In case, it is present in excess in the human body, it will deposit in the vessel walls, because of this the vessel walls become rigid, the blood pressure increases, or, if the deposited particles come of the vessel walls for some reason, the vessel may get occluded, and if this happens In the coronary artery or other vessels, it leads to death.

In many countries, also in Hungary, the ratio of myocardial infarction can amount up to 50% of causes of death.

It has been observed that in countries where people consume a lot of fish, the ratio of myocardial infarction ís rather low.

This is unambiguously attributed to the so-called omega-3 polyunsaturated fatty acids being present in the fish lard in higher quantity.

In these fatty acids the first double bond is located at the third carbon atom, counted from the methyl end of the molecule, and the double bonds are in divinyl-methane rithm. Western diet contains nil or very small quantity of omega-3 fatty acids. The most frequently consumed olive oil, sunflower oil or lard contains no omega-3 fatty acid, though for humans, 0,4-0,5% of the ingested calories must be in such a form (Sardesi, V. M., J. Nutr. Biochem. 3, 155-166, 1992).

These omega-3 polyenoic acids decrease platelet aggregation, lower the cholesterol and triglyceride serum level, inhibit the deposition of cholesterol into the vessel walls, and additionally, they are important components of the central nervous system, e.g. they are essential for the normal function of the brain. Purified fish oil is available in encapsulated form.

The world's fish oil production is about 1-2 million metric ton per year, but most of it is used for other purposes, so according to estimations, the needs of only 80-100 millions of people can be filled, though a multiple number of humans are arteriosclerotic and exposed to the risk of infarction. Anyhow, it seems to be justified to provide alternative omega-3 sources, taking into consideration the fact, that many people dislike fish oil preparations.

The most simple omega-3 polyunsaturated fatty acid is the linolenic acid (3,6,9-octadecatrienoic acid, 18:3 omega-3 or n-3), the animal body uses this acid for building up the long chain polyunsaturated omega-3 fatty acids. A number of plants (perilla, flax, soybean, canola, nut) have seeds rich in linolenic acid.

Document DE-A-4 301 736 discloses animal feed additives comprising perillaseed as n-3 fatty acid source. Said additives reduce the fat rate deposited in organs of treated animals.

The beneficial biological effects of linolenic acid were shown also by Cunnan et. al. (Brit.. J. Nutr. 69, 443-453, 1993).

Thus, it seems to be obvious to feed the various domestic animals with these seeds or the oil obtained from them, provided in a suitable form, because in the animal body this fatty acid or its different derivatives accumulate, and the products obtained from the animals (meat, milk, egg etc.) can be used for nutrition purposes. Certain preliminary data prove that a relatively low linolenic acid quantity brought into the human body, reduces the cholesterol level and also the risk of myocardial infarction (de Loregil, M. et al., The Lancet, 343, 1454-1459, 1994).

In this way, since a number of countries have no sea-fishery, the beneficial effects of the omega-3 fatty acids could be extended to great masses of the people. We had tried experiments, where animals were fed with feed containing additive rich in linolenic acid. We have found that in the animal products, such as lard, meat, liver, milk, egg, the linolenic acid accumulated to a certain degree.

However, we could hardly detect this effect in case of cows, because the linolenic acid was hydrogenated in the rumen and so it lost its advantageous effect. This biohydrogenation takes place in the body of other animals too, though at a lower degree.

Experiments were carried out in order to supply feed, containing linolenic acid, with a proper cover preventing the autooxydation.

We have found that when the grounded flaxseed or other seeds or the flaxseed oil applied to a carrier which was then granulated, was covered with a material of high molecular weight, preferably with paraffin, wax, fatty acid of higher number of carbon atoms, a polymer, the hydrogenating effect experienced in the animal body disappeared or significantly decreased.

The subject of the invention therefore a feed additive having physiologically favourable effect, which comprises grist of flaxseed or grist of soybean or grist of canolaseed or grist of perillaseed or flaxseed oil press cake or flaxseed oil applied to a carrier, optionally 0,001-1% by weight of vitamin E, 0,001-1% by weight, of bile acid and on the surface of the solid material 0,0-5% by weight paraffin or wax or palmitic acid or a mixture thereof or natural or synthetic polymer and 0,1-5% by weight of known auxiliary materials. The polymer is preferably cellulose acetate, gelatine, polyvinyl alcohol, a polyvinyl alcohol acetate.

A further object of the invention is a process for the preparation of said feed additive. The process according to the invention comprises mixing grist of flaxseed or grist of soybean or grist of canolaseed or grist of perillaseed or granulated flaxseed oil press cake or flaxseed oil applied to a granulated carrier, optionally 0,001-1% by weight of vitamin E and 0,001-1% by weight of bile acid and coating the mixture with 0,5-10 % by weight of a mixture consisting of paraffin or wax or palmitic acid or a mixture thereof or natural or synthetic polymers, 0,2-1% by weight of surface-active material and optionally vitamin E, bile acid, solvent.

The additive according to the invention can be used as feed additive for pig, cow, layer, fish and kinds of fish.

The feed additive and the process for its preparation are illustrated by the following examples.

### Example 1

The flaxseed was grounded and the coat was applied within 48 hours.

After grinding the flaxseed had the following particle size distribution:

| | |
|---|---|
| 2,0 mm | 2,2 % by weight |
| 0,8 mm | 62,0% by weight |
| 0,5 mm | 20,7% by weight |
| 0,2 mm | 9,1% gy weight |
| under 0,2 mm | 5,0 % by weight |

The composition of the material used for coating the flaxseed was the following:

| | |
|---|---|
| 98,2% | by weight of paraffin of food industry grade (K 30/95 MOL Rt.) (softening point: 65°C) |
| 1,5% | by weight of HOCHST WACHS KP-301 (product of HOECHST) |
| 0,3% | by weight of TWEEN 80 emulgeator (product of ATLAS) |

The quantity of the coating material applied was 6 parts by weight to 100 parts by weight of grist.

The coating process involved the following steps: The grist of flaxseed was warmed to 75-95°C.

The homogenized coating mixture was warmed to 75°C and then added to the grist under continuous stirring. The stirring was continued until the coating material distributed homogenously on the surface of the flaxseed grist. During this time the temperature of the mixture was maintained at 90°C.

After the mixture became completely homogenous the grist was cooled to room temperature.

The coating was carried out in a single-worm blending equipment consisting of a heated section and a cooled one. For heating to the suitable temperature electric heating element and for cooling water counterflow was used.

### Example 2

The process described in Example 1 was followed with the exception that for coating a mixture containing 0,1% by weight of vitamin E and 0,2% by weight of bile acid was used.

### Example 3

The process described in Example 1 was followed with the exception that instead of the grist of flaxseed starting material bran granules were used to which flaxseed oil was applied. The flaxseed oil content of the granules was 30% by weight and it also contained 0,001% by weight of vitamin E and 0,1% by weight of bile acid.

### Example 4

The process described in Example 1 was followed with the exception that grist of perillaseed was substituted for the grist of flaxseed.

### Example 5

A group of 50 pigs was fed for one month with a feed containing 20% of feed additive according to Example 1. The control group consisting of 50 pigs was fed with the usual feed for one month.

The composition of fatty acids was determined in the lard, meat and liver of the animals.

The results are given in the following table.

| **Fatty acid** | **Number of C=** | **Lard** | | **Ham** | | **Chop** | | **Chuck** | | **Liver** | |
|---|---|---|---|---|---|---|---|---|---|---|---|
| | | C | | C | T | C | T | C | T | C | T |
| Myristic acid | 14:0 | 1,9 | 1,6 | 1,8 | 1,4 | 1,3 | 1,4 | 1,9 | 1,4 | - | - |
| Palmitic acid | 16:0 | 21,3 | 20,3 | 20,0 | 19,1 | 20,6 | 19,5 | 19,5 | 18,0 | 11,8 | 12,7 |
| Palmitoleic acid | 16:1 n-7 | 6,0 | 4,8 | 4,4 | 3,2 | 3,8 | 3,3 | 4,4 | 3,3 | 1,4 | 1,7 |
| Stearic acid | 18:1 | 52,5 | 5,7 | 46,3 | 8,1 | 10,4 | 8,8 | 8,4 | 7,2 | 24,1 | 14,9 |
| Oleic acid | 18:1 n-9 | 52,5 | 40,6 | 46,3 | 32,7 | 35,3 | 38,0 | 30,3 | 35,8 | 15,1 | 24,4 |
| Lineic acid | 18:2 n-6 | 12,7 | 14,0 | 15,3 | 16,2 | 15,4 | 12,7 | 18,6 | 15,3 | 12,4 | 15,0 |
| Linolenic acid | 18:3 n-3 | 1,0 | 10,7 | 1,5 | 9,4 | 0,7 | 8,3 | 1,7 | 10,2 | 1,1 | 11,4 |
| Arachidonic acid | 20:4 n-6 | - | - | 3,8 | 3,3 | 4,7 | 1,8 | 6,6 | 2,7 | 7,4 | 5,6 |
| Docosahexaenoic acid | 20:5 n-3 | - | - | - | 0,7 | - | 0,5 | - | 0,6 | 2,3 | 7,7 |
| | n-6/ n3 | 12,7 | 1,3 | 12,7 | 1,9 | 28,7 | 1,6 | 14,8 | 1,6 | 8,8 | 1,1 |
| | n-3/ n-6 | 0,08 | 0,76 | 0,07 | 0,51 | 0,03 | 0,51 | 0,06 | 0,60 | 0,11 | 0,92 |

| | | | | | | | | | | | |
|---|---|---|---|---|---|---|---|---|---|---|---|
| C = Control | | | | | | | | | | | |
| T = Treated | | | | | | | | | | | |

The results show that in the lard, meat and liver of animals fed with a feed containing the additive according to the invention, the quantity of linolenic acid increased compared to the control.

### Example 6

A group of 100 layers was fed with conventionel feed containing 25% by weight of feed additive according to Example 2.

The number of layers in the control group was also 100 and the animals were fed with conventional feed containing no additive.

The eggs layed by the animals involved in the experiment were examined for the fatty acid composition. The results obtained are given in the following table.

| Fatty acid composition of eggs (% by weight) | | | |
|---|---|---|---|
| | | Treated | |
| | Control | 15 days | 21 days |
| Palmitic acid 16:0 | 26.4 | 21.6 | 23.3 |
| Stearic acid 18:0 | 6.6 | 6.0 | 6.1 |
| Oleic acid 18:1n-9 | 46.4 | 42.6 | 43.5 |
| Linoleic acid 18:2n-6 | 10.0 | 8.5 | 8.7 |
| Linolenic acid 18:3n-3 | 0.3 | 17.2 | 15.8 |
| Arachidonic acid 20:4n-6 | 2.9 | 1.4 | 2.0 |
| 22:6n-3 | 0.8 | 2.2 | 2.6 |
| Docosahexaenoic acid n-6/n-3 | 11.7 | 0.53 | 0.58 |
| n-3/n-6 | 0.08 | 1.86 | 1.71 |

The results show that in the eggs layed by the animals of the test group the linolenic acid content significantly increased.

### Example 7

An experimental group of 30 cows was fed for 60 days with a feed containing feed additive according to Example 1. The animals consumed from this feed twice a day such a quantity which contained 2 x 500 g of additive according to Exaple 1. The fatty acid composition of the milk was examined. The results which are the means of 5 separate determinations are given in the following table.

| Fatty acid composition of cow's milk | | |
|---|---|---|
| **Fatty acid (number of C atoms: number of double bounds)** | **Control % by** | **Treated weight** |
| Capric acid 10:0 | 2,8 | 4,2 |
| Lauric acid 12:0 | 2,7 | 4,6 |
| Myristic acid 14:0 | 10,5 | 13,5 |
| Palmitic acid 16:0 | 31,2 | 23,8 |
| Palmitoleic acid 16:1 | 2,6 | 2,1 |
| Stearic acid 18:0 | 10,6 | 6,7 |
| Oleic acid 18:1n-9 | 28,1 | 32,6 |
| Linoleic acid 18:2n-6 | 2,9 | 6,4 |
| Linoleic acid 18-3n-6 | 0,6 | 2,6 |
| Eicosenoic acid 20: In-9 | 0,5 | 2,2 |

It can be seen that the level of 18:0 acid decreased by 33% by weitht, while that of 18:2 and 18:3 acids rose by 100% by wight and 400% by weight, respectively in the milks of experimental animals. Both, the reduction in 18:0 acid and the increase in 18:2 and 18:3 acids indicate a reduction of biohydrogenation processes taking place in the rumen.

## Claims

1. A feed additive having phisiologically favourable effect which comprises grist of flaxseed or grist of soybean or grist of canolaseed or grist of perillaseed or flaxseed oil press cake or flaxseed oil applied to a carrier and further, optionally 0,001-1% by weight of vitamin E, 0,001-1% by weight of bile acid, and on the surface of the solid material 0,5-5% by weight of paraffin or wax or palmitic acid or a mixture thereof, or natural or synthetic polymer and 0,1-5% by weight of known auxiliary materials.

2. The feed additive according to Claim 1, wherein the polymer is cellulose acetate, polyvinyl alcohol, polyvinyl alcohol acetate.

3. Process for the preparation of feed additive, which comprises mixing grist of flaxseed or grist of soybean or grist of canolaseed or grist of perillaseed or granulated flaxseed oil press cake or flaxseed oil applied to a granulated carrier, and optionally 0,001-1% by weight of vitamin R and 0,001-1% by weight of bile acid, and coating the mixture obtained with 0,5-10 % by weight of a mixture consisting of paraffin or wax or palmitic acid or a mixture thereof or natural or synthetic polymer, 0,2-1% by weight of surface-active material, and optionally vitamin E, bile acid, solvent.

## Patentansprüche

1. Futtermittelzusatzstoff mit physiologisch vorteilhafter Wirkung, umfassend Mahlgut aus Flachssamen oder Mahlgut aus Sojabohnen oder Mahlgut aus Canolasamen oder Mahlgut aus Perillasamenöl- oder Flachssamenölpreßkuchen oder aus Flachssamenöl, das auf einen Träger aufgebracht wird, und weiter umfassend wahlweise 0,001-1 Gew.% Vitamin E, 0,001-1 Gew.% Gallensäure, und an der Oberfläche des festen Materials 0,5-5 Gew.% Paraffin oder Wachs oder Palmitinsäure oder einer Mischung davon oder natürliches oder synthetisches Polymer und 0,1-5 Gew.% bekannter Hilfsstoffe.

2. Futtermittelzusatzstoff nach Anspruch 1, wobei das Polymer Celluloseacetat, Polyvinylalkohol, Polyvinylalkoholacetat ist.

3. Verfahren zur Herstellung des Futtermittelzusatzstoffes, aufweisend das Mischen des Mahlgutes aus Flachssamen oder des Mahlgutes aus Sojabohnen oder des Mahlgutes aus Canolasamen oder des Mahlgutes aus Perillasamenöl- oder gekörntem Flachssamenölpreßkuchen oder aus Flachssamenöl, das auf einen gekörnten Träger aufgebracht wird, und wahlweise 0,001-1 Gew.% Vitamin E, 0,001-1 Gew.% Gallensäure, und das Beschichten des so erhaltenen Gemisches mit 0,5-5 Gew.% einer Mischung, die aus Paraffin, oder Wachs, oder Palmitinsäure oder einer Mischung davon oder natürlichem oder synthetischem Polymer, 0,2-1 Gew.% eines oberflächenaktiven Materials und wahlweise Vitamin E, Gallensäure und Lösungsmittel besteht.

## Revendications

1. Un additif alimentaire ayant des effets physiologiquement favorables qui comprend de la mouture de graines de lin, ou de la mouture de fèves de soja, ou de la mouture de graines de canola, ou de la mouture de graines de perilla ou du tourteau d'huile de lin ou de l'huile de lin appliquée sur un support, et en outre, éventuellement 0,001-1 % en poids de vitamine E, 0,001-1 % en poids d'acide biliaire et sur la surface des substances solides, 0,5-5 % en poids de paraffine ou de cire ou d'acide palmitique ou de leurs mélanges, ou un polymère naturel ou synthétique, et 0,1-5 % en poids de substances auxiliaires connues.

2. L'additif alimentaire selon la revendication 1, dans lequel le polymère est l'acétate de cellulose, l'alcool polyvinylique, l'acétate d'alcool polyvinylique.

3. Un procédé de préparation d'additif alimentaire qui comprend le malaxage de mouture de graines de lin ou de mouture de graines de fèves de soja ou de mouture de graines de canola ou de mouture de graines de perilla ou du tourteau d'huile de lin granulée ou de l'huile de lin appliquée sur un support granulaire et le cas échéant, 0,001-1 % en poids de vitamine E et 0,001-1 % en poids d'acide biliaire et l'enrobage du mélange obtenu par 0,5-10 % en poids d'un mélange consistant en paraffine ou cire ou acide palmitique ou leurs mélanges ou de polymères naturels ou synthétiques, 0,2-1 % en poids d'agent tensioactif et le cas échéant, de la vitamine E, de l'acide biliaire et du solvant.
